# EUROPÄISCHE PATENTANMELDUNG

(11) **EP 1 078 886 A2**
(43) Veröffentlichungstag der Anmeldung: **28.02.2001**
(21) Anmeldenummer: 00116543.0
(22) Anmeldetag: 01.08.2000
(51) Int. Cl.: C02F 3/06, C02F 3/10

(54) **Festbett zur biologischen Abwasserreinigung und Verfahren zum Inspizieren des Festbettes**

(30) Priorität: 20.08.1999 DE 19939674
(71) Anmelder: NORDDEUTSCHE SEEKABELWERKE GMBH & CO. KG, 26954 Nordenham (DE)
(72) Erfinder: Bittner, Hans-Jürgen, 26954 Nordenham (DE)
(74) Vertreter: Möller, Friedrich, Dipl.-Ing.

(57) **Zusammenfassung**

Die Erfindung betrifft ein Festbett zur biologischen Abwasserreinigung, mit einem aus mehreren Füllkörperblöcken (29 bis 32, 36 bis 39) bestehenden Festbettkörper (11), wobei jeweils mehrere übereinander angeordnete Füllkörperblöcke Füllkörpersäulen (12 bis 15) bilden, die über Haltemittel (Stangen 24) lösbar am Boden (Wandung 17) des Festbettes (10) verankert sind, und wobei mehrere Füllkörpersäulen (12 bis 15) neben- und hintereinander angeordnet sind. Erfindungsgemäß ist mindestens ein Füllkörperblock (36) oder wenigstens ein Teil einer der Füllkörpersäulen als Kontrollsäule (33) aus dem Festbettkörper (11) zu Inspektionszwecken heraushebbar.

## Beschreibung

Die Erfindung betrifft ein Festbett gemäß dem Oberbegriff des Anspruchs 1 sowie ein Verfahren zum Inspizieren eines Festbettes gemäß dem Oberbegriff des Anspruchs 12.

Ein Festbett zur biologischen Abwasserreinigung weist einen in einem Becken, Behälter, Tank oder dergleichen, auf einem Auflager angeordneten Festbettkörper auf. Dieser besteht aus mehreren nebeneinander und hintereinander angeordneten Füllkörpersäulen, die über Haltemittel lösbar am Boden des Festbettes - Boden des Behälters - verankert sind. Dabei sind die Füllkörpersäulen aus jeweils mehreren übereinander angeordneten Füllkörperblöcken gebildet. Jeder Füllkörperblock besteht aus rasterartig zusammengesetzten Rohren, die mantelseitig und/oder an ihren gegenüberliegenden Stirnseiten miteinander verbunden sind. Bei den Rohren handelt es sich vorzugsweise um Kunststoffrohre mit netzartig strukturierter Mantelfläche, sogenannte Gitterrohre.

Der Festbettkörper dient als Träger für die zur biologischen Behandlung erforderlichen Bakterien, nämlich eines sogenannten biologischen Rasens. Die erwähnten Gitterrohre haben sich mit ihrer strukturierten Oberfläche als Träger für den biologischen Rasen bewährt.

Der Festbettkörper wird von dem zu reinigenden Abwasser durchströmt und dabei belüftet. Durch den im Zeitablauf wachsenden biologischen Rasen bekommen die Füllkörpersäulen bzw. Gitterrohre einen zunehmenden Strömungswiderstand. Nach Erreichen einer bestimmten Grenze sind eine Reinigung oder ein Austausch des Festbettkörpers erforderlich. Der bestmögliche Zeitpunkt hierfür ist bislang nicht ermittelbar. Es muß mit Schätzwerten gearbeitet werden.

Aufgabe der vorliegenden Erfindung ist es, ein Festbett und ein Verfahren zu schaffen, womit der Zustand des biologischen Rasens auf einfache Weise bestimmbar ist.

Ein Festbett zur Lösung der genannten Aufgabe weist die Merkmale des Anspruchs 1 auf. Vorzugsweise ist eine der Füllkörpersäulen als Kontrollsäule ausgebildet und zu Inspektionszwecken aus dem Festbettkörper heraushebbar. Anschließend kann der biologische Rasen optisch inspiziert oder auf andere Weise untersucht werden.

Üblicherweise sind die Füllkörperblöcke einer Füllkörpersäule zusammengehalten und am Boden des Festbettes verankert. Als Kontrollsäule kann aber auch ein einzelner Füllkörperblock oder ein Teil einer Füllkörpersäule vorgesehen sein. Entsprechend kann eine Füllkörpersäule zu diesem Zweck geteilt sein, in einem oberen Bereich als Kontrollsäule und einen unteren Bereich als im Festbett verbleibende Teil-Füllkörpersäule. Natürlich kann die Kontrollsäule auch aus einem einzelnen Füllkörperblock bestehen.

Damit die Kontrollsäule im Abwasser des Festbettes nicht aufschwimmt, ist oberhalb einer Oberseite der Kontrollsäule ein Zusatzgewicht als Niederhalter vorgesehen.

Für das Herausheben der Kontrollsäule aus dem Festbett ist ein vertikales, mittiges Trag- und Halteorgan vorgesehen, insbesondere eine mittig angeordnete Stange, die oben aus der Kontrollsäule herausragt und die zugleich das Zusatzgewicht trägt. Dabei werden mit dem Trag- und Halteorgan mehrere Füllkörperblöcke zusammengehalten.

Vorteilhafterweise ist die Kontrollsäule von einem Rahmen umgeben, vorzugsweise von einem Führungsrahmen zum leichteren Einsetzen der Kontrollsäule in den Festbettkörper. Dabei erstreckt sich der Rahmen zumindest über eine obere Teilhöhe des Festbettkörpers. Ausgeführt ist der Rahmen mit vier vertikalen Profilen, die jeweils einen L-Querschnitt aufweisen und zwischen denen die Kontrollsäule geführt ist. Vorzugsweise sind die Profile durch schräggerichtete Streben miteinander verbunden. Der Rahmen steht oben über die Oberseite der Füllkörpersäulen über und weitet sich in diesem Bereich insbesondere konisch auf mit nach oben zunehmendem Querschnitt. Im Bereich eines oben umlaufenden Randes sind vorzugsweise Querstreben angeordnet. Beim Wiedereinsetzen der Kontrollsäule in den Festbettkörper erleichtert der Rahmen die Führung der Kontrollsäule und verhindert ein Verhaken der Kontrollsäule mit den benachbarten Füllkörpersäulen.

Das Festbett weist eine Einrichtung zum Anheben der Kontrollsäule mit einem Zugmittel zum Erfassen derselben auf. Insbesondere ist ein Seil mit einer entsprechenden Seilwinde vorgesehen. Die Einrichtung ist ähnlich einem Kran gestaltet mit einer Tragsäule - einem Galgen - und einem oben anschließenden Querträger. Das Seil ist über entsprechend angeordnete Umlenkrollen geführt, so daß die Kontrollsäule senkrecht aus dem Festbettkörper herausgehoben werden kann.

Der Einrichtung zum Anheben der Kontrollsäule ist ein Meßwertaufnehmer zugeordnet, mit dem die auf die Einrichtung wirkende Last beim Anheben oder Halten der Kontrollsäule meßbar ist. Der Meßwertaufnehmer kann in das Zugmittel - in das Seil - integriert sein, insbesondere knapp oberhalb der Kontrollsäule. Von dem Meßwertaufnehmer besteht eine Verbindung zu einer Anzeige für die Meßwerte oder zu einem Meßwertsender. Durch den biologischen Rasen wird das Gewicht der Kontrollsäule erhöht. Entsprechend kann aus dem Gewicht ein Rückschluß auf den Wachstumsstand des biologischen Rasens getroffen werden. Die erfaßten Meßwerte repräsentieren die Last und damit den Wachstumsstand des biologischen Rasens.

Alternativ oder zusätzlich kann die Kontrollsäule nach dem Herausheben optisch - etwa über eine Kamera - untersucht werden. Das Bild kann elektronisch ausgewertet werden. Die Kamera kann am Festbett angeordnet sein und das Bild in Form von Daten per Funk oder über eine entsprechende Leitung an einen Rechner zur Auswertung übergeben. Analog gilt dies für die vom Meßwertaufnehmer ermittelten Werte.

Ein Verfahren zur Lösung der eingangs genannten Aufgabe weist die Maßnahmen des Anspruchs 12 auf. Dadurch ist es möglich, den biologischen Rasen einfach und für Bedienungspersonen gefahrlos zu inspizieren.

Bevorzugte Ausführungsbeispiele der Erfindung werden nachfolgend anhand von Zeichnungen näher erläutert. Es zeigen:
- Fig. 1: einen seitlichen Schnitt durch ein erfindungsgemäßes Festbett,
- Fig. 2: einen seitlichen Schnitt durch ein Festbett mit Draufsicht auf einen Festbettkörper, und
- Fig. 3: eine Draufsicht von oben auf ein erfindungsgemäßes Festbett.

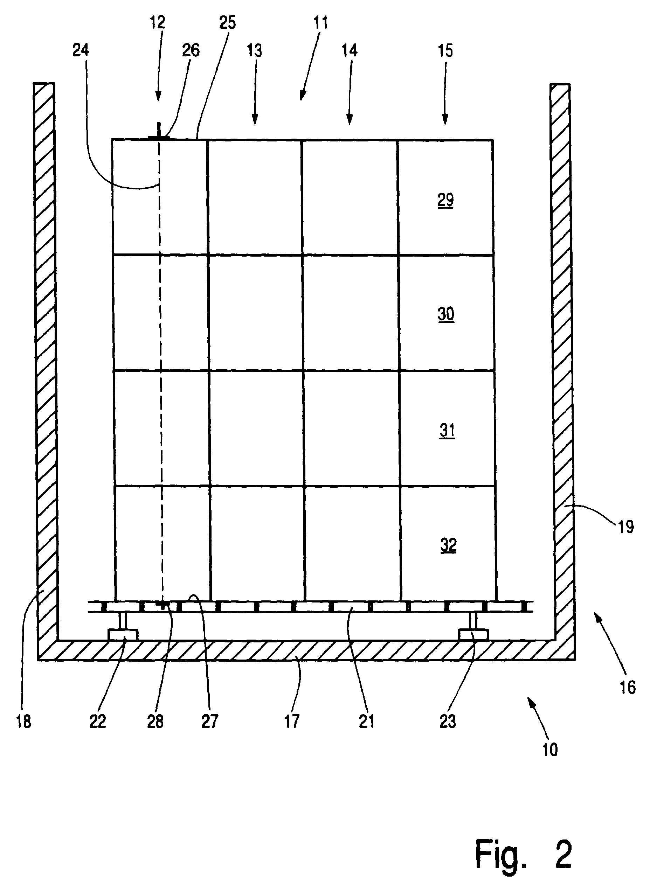

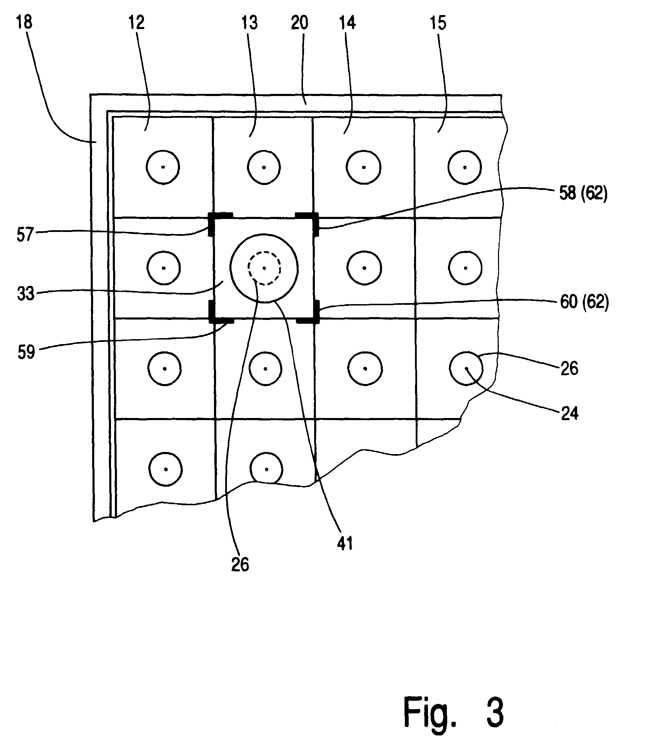

Ein Festbett 10 weist einen Festbettkörper 11 aus mehreren nebeneinander und hintereinander angeordneten Füllkörpersäulen 12, 13, 14, 15 auf. In den Figuren 2 und 3 sind viermal vier Füllkörpersäulen angedeutet. Tatsächlich können auch mehr oder weniger Füllkörpersäulen vorhanden sein.

Zur Aufnahme des Festbettkörpers 11 weist das Festbett 10 einen Behälter 16 mit einer Bodenplatte 17 und aufrechten Wandungen 18, 19, 20 auf, die einen quaderförmigen, oben offenen Raum bilden. Der Behälter 16 kann auch als Wanne in den Boden eingelassen sein. Ebenso kann eine umlaufende gekrümmte Wandung vorhanden sein.

Die Füllkörpersäulen 12 bis 15 stehen dicht aneinander und vorzugsweise mit geringem Abstand zu den Wandungen 18 bis 20.

Zwischen dem Festbettkörper 11 und der Bodenplatte 17 besteht ebenfalls ein Abstand. Der Festbettkörper 11 ruht auf einer durchlässigen Gestellplatte 21, die mit Füßen 22, 23 auf der Bodenplatte 17 steht.

Der Behälter 16 ist mit dem zu reinigenden Abwasser gefüllt. Dabei ist der Festbettkörper 11 von der Flüssigkeit bedeckt. Um zu vermeiden, daß der Festbettkörper 11 insgesamt oder die einzelnen Füllkörpersäulen 12 bis 15 aufschwimmen, besteht eine Verankerung an der Bodenplatte 17. So ist die Gestellplatte 21 über die Füße 22, 23 an der Bodenplatte 17 befestigt. Außerdem sind die Füllkörpersäulen 12 bis 15 über durchgehende Stangen 24 an der Gestellplatte 21 verankert. Diese Art der Verankerung ist lediglich in Fig. 2 für die Füllkörpersäule 12 gezeigt. Die Stange 24 erstreckt sich durch die Füllkörpersäule 12 hindurch und weist an einer Oberseite 25 derselben eine als Gegenhalter fungierende Scheibe 26 auf. Die Unterseite 27 der Füllkörpersäule 12 liegt auf der Gestellplatte 21 auf. In diesem Bereich ist die Stange 24 durch eine Scheibe 28 gegen ein Abheben von der Gestellplatte 21 gesichert. Nähere Angaben zum Aufbau eines Festbettes sind auch dem deutschen Gebrauchsmuster 298 12 564.1 der Anmelderin entnehmbar.

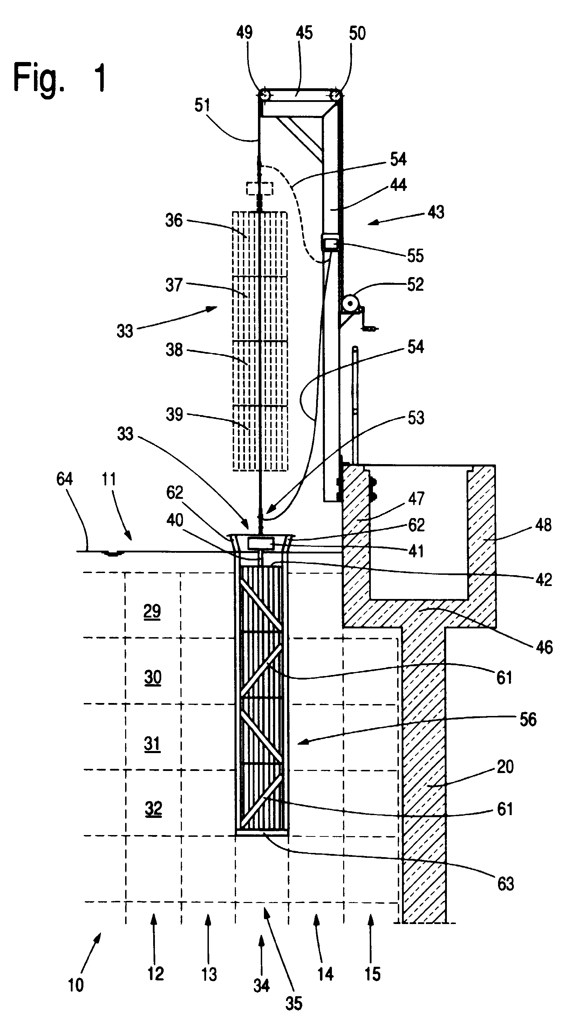

Jede Füllkörpersäule 12 bis 15 besteht aus mehreren, übereinander angeordneten Füllkörperblöcken 29, 30, 31, 32. Diese sind wiederum aus nicht näher gezeigten aufrechten Netzrohren mit einer rasterartigen Oberfläche zusammengesetzt. Das Vorhandensein einzelner Netzrohre als Bestandteile der Füllkörperblöcke ist in Fig. 1 angedeutet.

Der sich im Betrieb im Festbettkörper 11 ausbildende biologische Rasen ist für die Funktion der Abwasserreinigung äußerst wichtig. Der Rasen wird von dem Abwasser umspült und gegebenenfalls über besondere Einrichtungen belüftet. Ein zu starkes Anwachsen des biologischen Rasens behindert die Abwasserströmung und verringert so die Reinigungsleistung. Es ist deshalb von Zeit zu Zeit eine Kontrolle des biologischen Rasens erforderlich. Zu diesem Zweck ist eine der Füllkörpersäulen als Kontrollsäule 33 ausgebildet und aus dem Verband der den Festbettkörper 11 bildenden Füllkörpersäulen heraushebbar, siehe Fig. 1. Hierzu ist eine Füllkörpersäule 34 unterteilt in einen oberen Abschnitt - die Kontrollsäule 33 und einen unteren Abschnitt - eine untere Teilsäule 35. Letztere ist mit der Gestellplatte 21 verankert und besteht aus einer nicht näher gezeigten Anzahl von Füllkörperblöcken. Demgegenüber ist die Kontrollsäule 33 nach oben aus dem Festbettkörper 11 heraushebbar und besteht im vorliegenden Beispiel aus vier übereinander angeordneten Füllkörperblöcken 36, 37, 38, 39. Diese sind von einer mittig durchgehenden Stange 40 zusammengehalten. Entsprechende Scheiben und Gegenhalter sind nicht eingezeichnet. In Fig. 1 erkennbar ist aber ein Gewicht 41, das oberhalb einer Oberseite 42 des obersten Füllkörperblocks 36 auf der Stange 40 befestigt ist und ein Aufschwimmen der Kontrollsäule 33 verhindert. Dies ist erforderlich, da die Kontrollsäule 33 nicht mit der Gestellplatte 21 verbunden ist und die vorgesehene Stange 40 unterhalb des unteren Füllkörperblocks 39 endet.

Das Herausheben der Kontrollsäule 33 aus dem Festbettkörper 11 erfolgt durch eine der Behälterwandung 20 zugeordnete Hebeeinrichtung 43, die nach Art eines Lasthebegalgens ausgebildet ist, nämlich mit einem aufrechten Träger 44 und einem hierzu quergerichteten Ausleger 45. Der Träger 44 ist mit der Wandung 20 oder Teilen derselben starr verbunden. Im vorliegenden Fall ist die Wandung 20 im oberen Bereich mit einem U-förmigen Querschnitt - bestehend aus einer Sohle 46 und aufrechten Wandungsteilen 47, 48 - versehen. Dadurch ist die Wandung 20 über die Sohle 46 begehbar. Zur Absicherung des Bedienungspersonals kann mindestens eines der Wandungsteile zusätzlich mit einem Haltegitter versehen sein, vorzugsweise auf der dem Festbettkörper 11 und zugleich dem Träger 44 zugewandten Wandungsteil 47.

Die Hebeeinrichtung 43 ist kranartig ausgebildet, mit einem über Umlenkrollen 49, 50 geführten Tragseil 51, das über eine am Träger 44 angeordnete Winde 52 einziehbar ist.

Die Winde 52 kann elektrisch oder von Hand betrieben sein. Das Tragseil 51 ist oberhalb des Gewichtes 41 mit der Stange 40 verbindbar. Dabei ist die Hebeeinrichtung 43 so ausgerichtet, daß das Tragseil 51 genau vertikal über der Kontrollsäule 33 hängt und somit beim Ausheben und Einsetzen der Kontrollsäule 33 keine Querkräfte zu berücksichtigen sind.

Vorteilhafterweise wird die Kontrollsäule 33 vollständig aus dem Festbettkörper 11 herausgehoben bis alle Füllkörperblöcke 36 bis 39 sichtbar sind. Es kann dann eine optische Kontrolle erfolgen, beispielsweise auch mit Hilfe einer dem Festbett 10 zugeordneten Kamera und einer über eine Leitung oder drahtlos angeschlossenen Bildverarbeitung in einem entsprechenden Rechner.

Im vorliegenden Fall wird als Besonderheit die am Tragseil 21 wirksame Zugkraft gemessen und zwar beim Herausheben der Kontrollsäule 33 oder nach dem Herausheben bei hängender Kontrollsäule. Die Kraftmessung erfolgt vorzugsweise durch einen Kraftaufnehmer mit Dehnungsmesstreifen - Meßsystem im Bereich zwischen dem Tragseil 51 und der Stange 40. Die Meßeinrichtung ist mit der Ziffer 53 bezeichnet und vorzugsweise über ein Kabel 54 mit einem Sender 55 verbunden, der am Träger 44 angeordnet sein kann. Von dem Sender 55 gelangen die Meßwerte drahtlos oder leitungsgebunden zu einem auswertenden Rechner. Auch ist eine drahtlose Übertragung ab der Meßeinrichtung 53 möglich.

Schließlich kann anstelle von oder zusätzlich zum Sender 55 eine Anzeigeeinheit für die ermittelten Meßwerte vorgesehen sein, gegebenenfalls auch direkt an der Meßeinrichtung 53.

Da die Füllkörpersäulen mit allenfalls geringem Abstand nebeneinander stehen, sind besondere Maßnahmen vorgesehen um das Absenken der Kontrollsäule 33 in den Festbettkörper ohne Störungen zu gewährleisten. Der für die Kontrollsäule 33 im Festbettkörper 11 vorgesehene Raum ist eingefaßt von einem Rahmen 56, im vorliegenden Fall bestehend aus vier aufrechten L-Profilen 57, 58, 59, 60, die durch schräggerichtete Streben 61 verbunden sind.

Die L-Profile 57 bis 60 erstrecken sich bis über die Oberseiten 25 der Füllkörpersäulen 12 bis 15 hinaus und divergieren in diesem Bereich, so daß obere Enden 62 der L-Profile voneinander einen größeren Abstand aufweisen als die L-Profile 57 bis 60 im übrigen. Außerdem sind die oberen Enden 62 vorzugsweise durch Querstreben miteinander verbunden (nicht gezeigt), ebenso die L-Profile im übrigen an deren unteren Enden durch Querstreben 63.

Die beschriebene divergierende Formation der oberen Enden 62 der L-Profile ermöglicht ein leichteres Absenken der Kontrollsäule 33 in den Festbettkörper 11. Verkantungen mit den jeweils benachbarten Füllkörpersäulen sind ausgeschlossen. Die Kontrollsäule 33 wird durch die L-Profile 57 bis 60 beim Absenken geführt. Die in den Festbettkörper 11 eingesetzte Kontrollsäule 33 ist in Fig. 3 in der Draufsicht erkennbar. Aus Gründen der besseren Übersichtlichkeit ist die Hebeeinrichtung 43 dort nicht gezeichnet. Tatsächlich kann auch neben dem Festbett 10 ein Kran angeordnet sein.

In Fig. 1 ist ein Füllstandslinie 64 oberhalb der Oberseite 42 erkennbar. Die L-Profile 57 bis 60 divergieren etwa ab der Füllstandslinie 64. Die Stange 40 ist so bemessen, daß das Gewicht 41 oberhalb der Füllstandslinie 64 zu liegen kommt.

Die einzelnen Füllkörperblöcke 29 bis 32 können auch im Verbund angeordnet sein, wie in dem oben genannten Gebrauchsmuster 298 12 564.1 gezeigt. Vorzugsweise besteht dann die Kontrollsäule aus einem einzelnen oberen Füllkörperblock.

### Bezugszeichenliste:

- 10: Festbett
- 11: Festbettkörper
- 12: Füllkörpersäule
- 13: Füllkörpersäule
- 14: Füllkörpersäule
- 15: Füllkörpersäule
- 16: Behälter
- 17: Bodenplatte
- 18: Wandung
- 19: Wandung
- 20: Wandung
- 21: Gestellplatte
- 22: Fuß
- 23: Fuß
- 24: Stange
- 25: Oberseite
- 26: Scheibe
- 27: Unterseite
- 28: Scheibe
- 29: Füllkörperblock
- 30: Füllkörperblock
- 31: Füllkörperblock
- 32: Füllkörperblock
- 33: Kontrollsäule
- 34: Füllkörpersäule
- 35: untere Teilsäule
- 36: Füllkörperblock
- 37: Füllkörperblock
- 38: Füllkörperblock
- 39: Füllkörperblock
- 40: Stange
- 41: Gewicht
- 42: Oberseite
- 43: Hebeeinrichtung
- 44: Träger
- 45: Ausleger
- 46: Sohle
- 47: Wandungsteil
- 48: Wandungsteil
- 49: Umlenkrolle
- 50: Umlenkrolle
- 51: Tragseil
- 52: Winde
- 53: Meßeinrichtung
- 54: Kabel
- 55: Sender
- 56: Rahmen
- 57: L-Profile
- 58: L-Profile
- 59: L-Profile
- 60: L-Profile
- 61: schräge Strebe
- 62: Enden
- 63: Querstreben
- 64: Füllstand

## Patentansprüche

1. Festbett zur biologischen Abwasserreinigung, mit einem aus mehreren Füllkörperblöcken (29 bis 32, 36 bis 39) bestehenden Festbettkörper (11), wobei jeweils mehrere übereinander angeordnete Füllkörperblöcke Füllkörpersäulen (12 bis 15) bilden, die über Haltemittel (Stangen 24) lösbar am Boden (Wandung 17) des Festbettes (10) verankert sind, und wobei mehrere Füllkörpersäulen (12 bis 15) neben- und hintereinander angeordnet sind, **dadurch gekennzeichnet**, daß mindestens ein Füllkörperblock (36) oder wenigstens ein Teil einer der Füllkörpersäulen als Kontrollsäule (33) aus dem Festbettkörper (11) zu Inspektionszwecken heraushebbar ist.

2. Festbett nach Anspruch 1, **dadurch gekennzeichnet**, daß die Kontrollsäule (33) mit einem Zusatzgewicht (41) versehen ist, insbesondere oberhalb einer Oberseite (42) der Kontrollsäule (33).

3. Festbett nach einem der voranstehenden Ansprüche, **dadurch gekennzeichnet**, daß der Kontrollsäule (33) ein vertikales, insbesondere mittiges Trag- und Halteorgan zugeordnet ist, das oben aus der Kontrollsäule herausragt, und mit dem die Kontrollsäule aus dem Festbettkörper (11) heraushebbar ist, vorzugsweise das Trag- und Halteorgan eine Stange (40) ist, die zugleich ein Zusatzgewicht (41) trägt, insbesondere mit Abstand zu einer Oberseite (42) der Kontrollsäule (33).

4. Festbett nach Anspruch 3, **dadurch gekennzeichnet**, daß das Trag- und Halteorgan (Stange 40) zum gleichzeitigen Zusammenhalten mehrerer Füllkörperblöcke (36 - 39) ausgebildet ist.

5. Festbett nach einem der voranstehenden Ansprüche, **dadurch gekennzeichnet**, daß die Kontrollsäule (33) aus mehreren Füllkörperblöcken (36 - 39) besteht, insbesondere jedoch aus weniger Füllkörperblöcken als im Festbettkörper (11) insgesamt übereinander angeordnet sind.

6. Festbett nach einem der voranstehenden Ansprüche, **dadurch gekennzeichnet**, daß die Kontrollsäule (33) von einem Rahmen (56) umgeben ist, insbesondere von einem Führungsrahmen zum leichteren Einsetzen der Kontrollsäule in den Festbettkörper (11), wobei sich der Rahmen (56) vorzugsweise nur über eine obere Teilhöhe des Festbettkörpers (11) erstreckt.

7. Festbett nach Anspruch 6, **dadurch gekennzeichnet**, dass sich der Rahmen (56) zumindest über die gesamte Höhe der Kontrollsäule (33) erstreckt und vorzugsweise der Rahmen (56) vier vertikale Profile (57 - 60) mit L-Querschnitt aufweist, zwischen denen die Kontrollsäule (33) geführt ist, und daß die Profile durch vorzugsweise schräggerichtete Streben (61) miteinander verbunden sind.

8. Festbett nach einem der voranstehenden Ansprüche 7 bis 9, **dadurch gekennzeichnet**, daß der Rahmen (56) oben über die Oberseiten (25) der Füllkörpersäulen (12 - 15) übersteht und sich in diesem Bereich insbesondere konisch aufweitet mit nach oben zunehmendem Querschnitt.

9. Festbett nach einem der voranstehenden Ansprüche, **gekennzeichnet durch** eine Einrichtung (43) zum Anheben der Kontrollsäule (33) und mit einem Zugmittel zum Erfassen und Anheben der Kontrollsäule, die vorzugsweise am Rand (20) des Festbettes (11) angeordnet ist und insbesondere mit einem Teil eines Gestells, zum Beispiel mit einem Ausleger (45), bis über die Kontrollsäule (33) ragt.

10. Festbett nach Anspruch 9, **dadurch gekennzeichnet**, daß der Einrichtung (43) oder dem Trag- und Halteorgan ein Meßwertaufnehmer (53) zugeordnet ist, mit dem die wirksame Last beim Anheben oder Halten der Kontrollsäule meßbar ist, wobei vorzugsweise der Meßwertaufnehmer (53) in das Zugmittel (Tragseil 51) integriert ist, insbesondere oberhalb der Kontrollsäule.

11. Festbett nach Anspruch 10, **dadurch gekennzeichnet**, daß von dem Meßwertaufnehmer (53) eine Verbindung zu einer Anzeige für die Meßwerte oder zu einem Meßwert-Sender (55) besteht.

12. Verfahren zum Inspizieren eines Festbettes (10) mit einem Festbettkörper (11) aus mehreren nebeneinander und gegebenenfalls auch übereinander angeordneten Füllkörpersäulen (12 - 15), die jeweils aus mindestens einem Füllkörperblock (29 - 32) bestehen, **dadurch gekennzeichnet**, daß mindestens ein Füllkörperblock oder wenigstens ein Teil einer Füllkörpersäule (12 - 15) als Kontrollsäule (33) aus dem Festbettkörper (11) herausgehoben und untersucht wird.

13. Verfahren nach Anspruch 12, **dadurch gekennzeichnet**, daß die Kontrollsäule (33) während oder nach dem Herausheben gewogen wird, wobei der ermittelte Meßwert insbesondere als Maß für den Bewuchs der Füllkörperblöcke (36 - 39) dient und vorzugsweise der ermittelte Meßwert drahtlos an eine den Meßwert verarbeitende und/oder anzeigende Einrichtung übermittelt wird.
